# EUROPEAN PATENT SPECIFICATION

(11) **EP 3 892 743 B1**
(45) Date of publication and mention of the grant of the patent: **09.08.2023**
(21) Application number: 20382275.4
(22) Date of filing: 06.04.2020
(51) Int. Cl.: C21C 5/52, C22B 4/00, F27B 3/08, F27B 14/06, F27B 14/08, F27B 14/10, F27D 1/00, F27D 11/08, F27D 99/00, H05B 7/06, H05B 7/085, H05B 7/11, C22B 15/00, C22B 25/06

(54) **ELECTRIC ARC FURNACE**
LICHTBOGENOFEN
FOUR À ARC ÉLECTRIQUE

(43) Date of publication of application: 13.10.2021
(73) Proprietor: DIGIMET 2013 SL, 20305 Irun (Guipuzcoa) (ES)
(72) Inventor: Eguizabal Landart, David, 20305 Irún (Guipúzcoa) (ES); Oncala Aviles, José Luis, 20009 Donostia - Guipúzcoa (ES); Artola Pernas, Antxon, 20009 Donostia - Guipúzcoa (ES); Iparraguirre Zabaleta, Jon Ander, 20009 Donostia - Guipúzcoa (ES)
(74) Representative: Balder IP Law, S.L.

(56) References cited:
- GB-A- 1 585 155
- JP-A- H06 226 429
- KR-B1- 101 731 990
- US-A1- 2004 157 725

## Description

### TECHNICAL FIELD

The present invention relates to the field of electric arc furnaces for chemical and/or metallurgical applications, such as melting and/or treating metals and/or metallic wastes and/or by-products containing metals and other chemical compounds, such as metal oxides.

### STATE OF THE ART

A wide variety of furnaces whose geometry, procedure and heating systems differ significantly are used in different chemical and metallurgical applications. Depending on their mode of operation, the furnaces can be grouped into continuous or batch furnaces, which can use electricity or fossil fuels. They may also be classified according to their geometry. They can be of direct or indirect application. The advantages of each type of furnace depend on several factors, such as the type and size of the load used, since load determines the energetic efficiency and metallurgical quality resulting from the applied process, such as melting or treatment process.

A well-known type of furnace using electricity is the direct current (DC) electric arc furnace. An example of DC electric arc furnace is disclosed in US4466824. The furnace has a crucible for collecting molten material. The surface of the crucible conceived to be in contact with molten material is made of refractory material. An anode is mounted at the bottom section of the crucible. A cover is disposed on the top section of the furnace. A cathode is inserted into the furnace through a central opening made on the cover. In operation of the furnace, when the cathode tip is in close proximity to the molten material filling the crucible, a plasma arc is started. Patent document KR 101 731 990 B1 has the specificity that the anode is mounted on a rod holder placed below the DC electric arc furnace.

In other DC arc furnaces, the anode is built in the crucible in the form of different kind of electrical conductors inserted within the refractory material of which the crucible is made. This is disclosed, for example, in US4541099, US5381440 and US5381441.

However, in the cited disclosures there are local electric connection areas which can have poor conductivity when starting operation with charges being at low temperature (for example <750°C for ferrous charges or <450°C for copper non-ferrous charges) or even at room temperature from cold furnace start. Poor conductivity in the electric circuit can generate huge energy losses and even malfunctioning of the facility. In the same way, this kind of local connections can lose completely electric conductivity due to cavities formed in the charge during melting or charging of the furnace.

### DESCRIPTION OF THE INVENTION

The present invention provides an improved electric arc furnace for chemical and/or metallurgical applications, such as melting and/or treating metals and/or metallic wastes and/or by-products containing metals and other chemical compounds, such as metal oxides, either simple or complex metal oxides.

The furnace of the invention comprises a chamber delimited by a crucible. The chamber has the double function of receiving the material to be treated and heating it for its treatment. The furnace is heated by an electric system, such as a plasma torch electric system, having two electrodes -cathode and anode. The electric system is equipped with a DC power supply. In operation of the furnace, the electrodes allow the current to flow from one electrode to the other one. The anode of the plasma system is the surface delimiting the chamber, that is to say, the crucible of the furnace. The cathode is an electrode, preferably a graphite electrode, disposed in the upper part of the chamber. The cathode is movable vertically, towards the chamber containing the material to be heated. Cathode and anode are electrically isolated from each other. In operation, when the cathode tip is in close proximity to the molten material filling the crucible, that is to say, the anode, a plasma arc is started. The main body of the furnace is made of one or more refractory materials surrounding the crucible.

According to a first aspect of the present invention, there is provided a direct current plasma arc furnace for melting and/or treating a material by production of electric arcs and providing a molten product. The furnace comprises: a tank comprising a crucible delimiting a chamber configured to receive material to be melted and/or treated, a plurality of refractory walls surrounding the outer surface of the crucible and a metallic frame covering the refractory walls; and a heating system configured for heating the received material, the heating system comprising a first electrode acting as cathode and a second electrode acting as anode, wherein the first electrode acting as cathode is a movable electrode configured to project vertically into the chamber delimited by the crucible. The crucible is made of a material comprising at least 98% of synthetic graphite, the crucible being part of an anode system also comprising said second electrode and at least one part connecting the crucible and the second electrode, said crucible having a double function: receiving and holding material to be melted and/or treated and providing electric conduction for the flow of current to heat said material, in such a way that, in use of the furnace, the voltage potential difference between the cathode and any point of the surface of the crucible defined to be in contact with the material to be melted and/or treated is the same. The at least one part of the anode system comprises: a first elongated portion having a first end connected to the bottom wall of the crucible and extending radially therefrom; and a second elongated portion having a first end connected to the second end of the first elongated portion, the second elongated portion extending vertically until its second end shows up outside the furnace.

In embodiments of the invention, the heating system comprises a plasma torch.

In embodiments of the invention, the cathode is made of a material comprising at least 98% in weight of synthetic graphite.

In embodiments of the invention, the plurality of refractory walls disposed between the outer surface of the crucible and the metallic frame comprises: a first layer of refractory material vertically surrounding the perimeter wall of the crucible; a second layer of refractory material vertically surrounding the first layer; a third layer of refractory material disposed beneath the bottom portion of the crucible; and a fourth layer of refractory material vertically surrounding the second layer and in contact with the outer metallic frame.

The first layer preferably comprises alumina-based corundum. More preferably, it is made of self-sintering alumina-based corundum having an amount of alumina larger than 85% in weight.

The second layer preferably comprises alumina-based concrete. More preferably, it is made of alumina-based conformed concrete having an amount of alumina larger than 90% in weight.

The third layer and the fourth layer preferably comprise calcined bauxite. More preferably, they also comprise alumina-based concrete.

In embodiments of the invention, the fourth layer extends downwards with respect to the third layer, surrounding previous refractory portions disposed around the crucible.

In embodiments of the invention, the furnace further comprises a fifth layer of refractory material surrounding the second elongated portion of the anode system, the fifth layer being a silica-based self-sintering refractory.

In another aspect of the invention, the use of the furnace previously described, is provided, for melting or treating metals and/or metallic wastes and/or by-products containing metals and other chemical compounds.

Thanks to its design and geometry, the proposed furnace is highly efficient and has low energetic consumption and high metallurgic performance. In addition, the furnace is versatile as it can be used for melting / treating different kinds of materials.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1A-1C show different views of a furnace according to an embodiment of the invention.
Figure 2 schematically shows a cross-sectional view of a tank comprised in the furnace of Figure 1, according to an embodiment of the invention.
Figure 3 schematically shows a cross-sectional view of a furnace according to an embodiment of the invention.
Figures 4A-4D show different views of the parts forming the anode of the heating system of the furnace of Figure 1.
Figures 5A-5B schematically show the parts forming the anode, once assembled, of the furnace of Figure 1.
Figure 6 schematically shows an electrical circuit for powering the furnace, according to an embodiment of the invention.
Figure 7 shows a side view of the furnace according to an embodiment of the invention, in which an extraction conduit for extracting fume from the furnace is illustrated.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings showing apparatuses and results according to the invention.

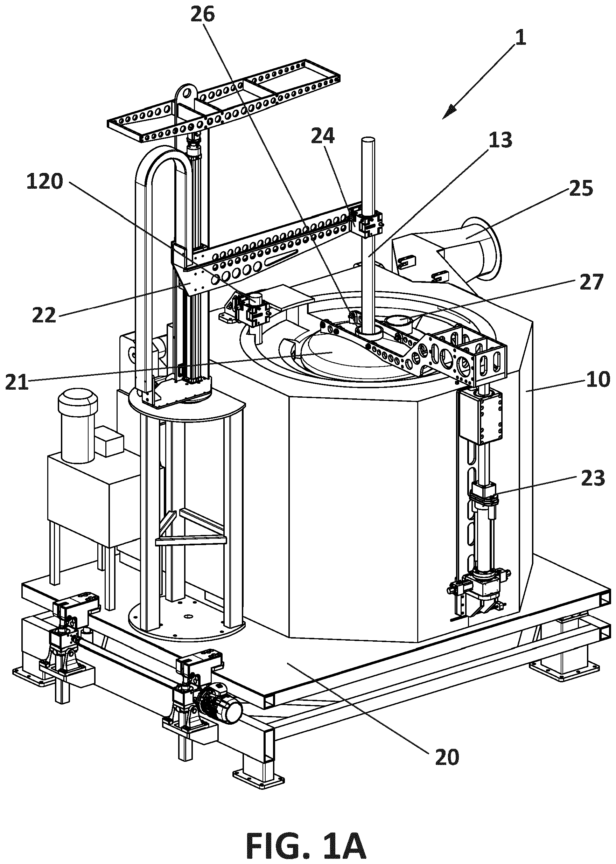

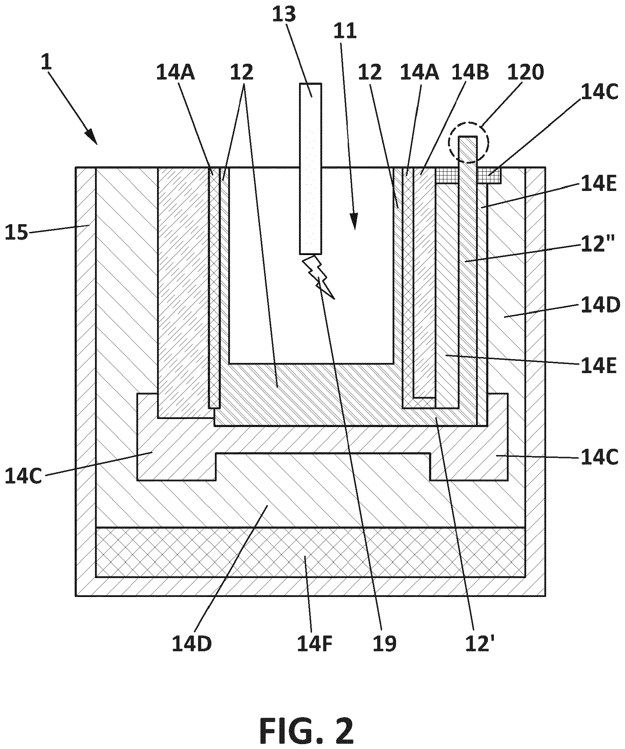

In reference to the figures, a possible embodiment of the furnace of this invention is described below. The furnace is a melting furnace, meaning that it processes material in melted state. The resulting product after the treatment applied in the furnace is in liquid state. The furnace of the invention is based on the direct heating of the loaded material by means of a direct current (DC) plasma arc, also referred to as DC plasma jet, obtained from two electrodes. In particular, furnace 1 is heated by a heating system, such as a plasma torch system, comprising two electrodes: a first electrode acting as cathode 13 (negative electrode) and a second electrode acting as anode 120 (positive electrode), as shown for example in Figures 1A-1C. Reference 120 denotes the anode connection. As can be gathered from the side view shown in Figure 1A, the DC arc furnace 1 comprises a tank, container or vessel 10 defining a chamber or inner volume 11 (seen for example in the cross-sectional view of the tank of Figure 2). Preferably, chamber 11 is a substantially central chamber in the furnace 1. In use of the furnace 1, chamber 11 is filled with material -such as melt- to be treated, such as metals, metallic waste or by-products containing metals and other chemical compounds, such as metal oxides. The inner walls (bottom and side walls) of the furnace defining chamber 11 constitute a crucible 12. In other words, crucible 12 receives the material to be treated, wherein it is heated. Thus, crucible 12 has the double function of receiving the material to be treated and heating/treating the material. As will be described in detail with reference to Figure 2, the crucible 12 is surrounded by one or more layers or walls or refractory material. Finally, the outer layer of the furnace 1 is made of metal. In other words, a metallic frame 15 surrounds the outer refractory walls, forming a metallic container. Metallic frame 15 allows thermal expansion of the materials forming the refractory layers, avoiding crack formation in those materials. A correct design in terms of symmetry, well-established distances and thermal isolation enables homogeneous heating and therefore an optimized furnace.

Metallic frame 15 is also suitable for holding the furnace 1 in order to tilt it for pouring the melt when the batch/cast is ready. The crucible 12 and its surrounding layers (refractory layers and metallic frame) are not refrigerated. In other words, there is no cooling means surrounding the crucible. This is because the furnace 1 is aimed at melting and treating material, which never solidifies within the crucible 12. On the contrary, once melted/treated, the liquid material (molten metal) is extracted from the furnace. For this reason, cooling means surrounding the crucible 12 is discouraged. Thus, the furnace 1 is not suitable for producing solid blocks within the crucible 12.

In the embodiment shown in Figure 1A, the furnace 1 is mounted on a platform 20. Platform 20 enables to tilt the furnace 1, for example with cleaning purposes. Thus, the furnace 1 may be tilted up to 90° for metal extraction and partial or complete emptying (poring /casting). In this operation, slag can also be casted out of the furnace and the crucible can be cleaned. If, during operation, partial slag removal is needed, depending for example on the characteristics of the molten material, it may not be correctly and safely made using conventional tilting systems. For this reason, platform 20 is used, which enables slightly tilting the furnace in a perpendicular way with respect to the proper tilting direction. This enables slag cleaning while molten/refined metal is hold in the crucible. Alternative ways of extracting the molten metal from the furnace 1 may be manual extraction or extraction using pumping means, among others.

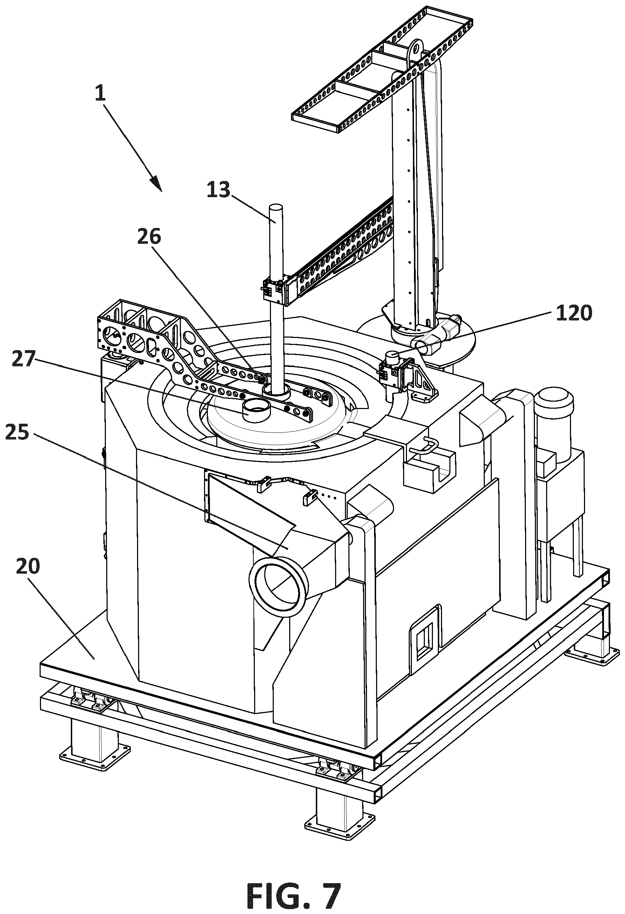

Some part of the charge (material being treated/heated) can be gasified, in which case it is collected with a filter dust system, which has a fume capturing means in the upper part of the furnace, around the upper ring. Fume is captured at the upper area of the furnace, conducted and extracted from the furnace through extraction conduit 25 (see Figure 7), from which fume is delivered to a main fume capturing system, not shown, which is out of the scope of the present invention.

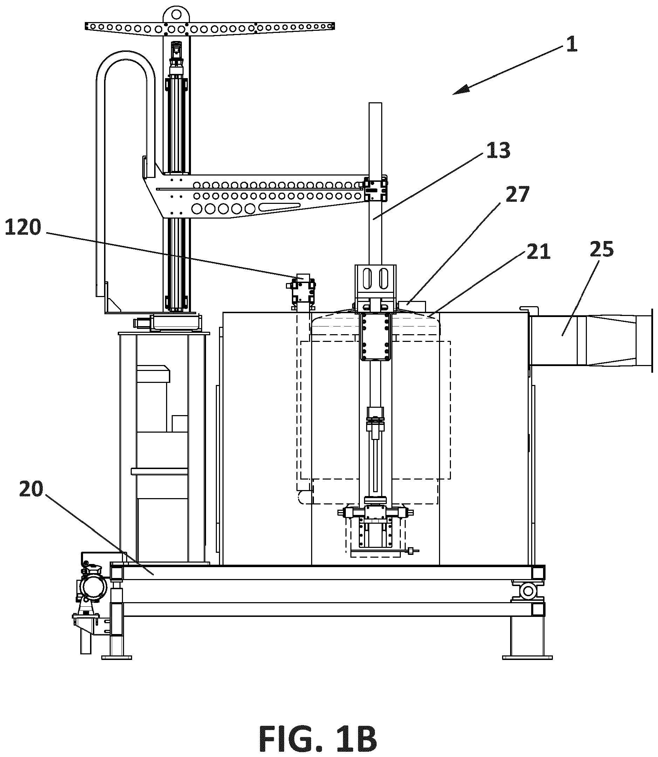

The furnace 1 also comprises a cover 21, as shown for example in Figure 1B, which closes the tank 10 during operation of the furnace for security reasons. Cover 21 is opened or closed by actuating means 23, which are out of the scope of the present invention. The cover 21 has a hole, inlet or through hollow 26 through which the electrode acting as cathode 13 is inserted into the tank 10, that is to say, into the volume 11 defined by the crucible 12. Hollow 26 is preferably located in the center of the cover 21, the cover 21 being preferably centered with respect to the chamber 11. Hollow 26 may have a maximum displacement of about 15% (measured with respect to the diameter of the chamber) with respect to the center of the cover 21. The material to be fed into the crucible 12 to be melted is conveyed into the crucible 12 through a second hole, inlet or through hollow 27 in the cover 21. Material feeding may be made, for example, by means of a vibrating feeding system. Material may be charged manually, with dossing screws, or by any other suitable loading means.

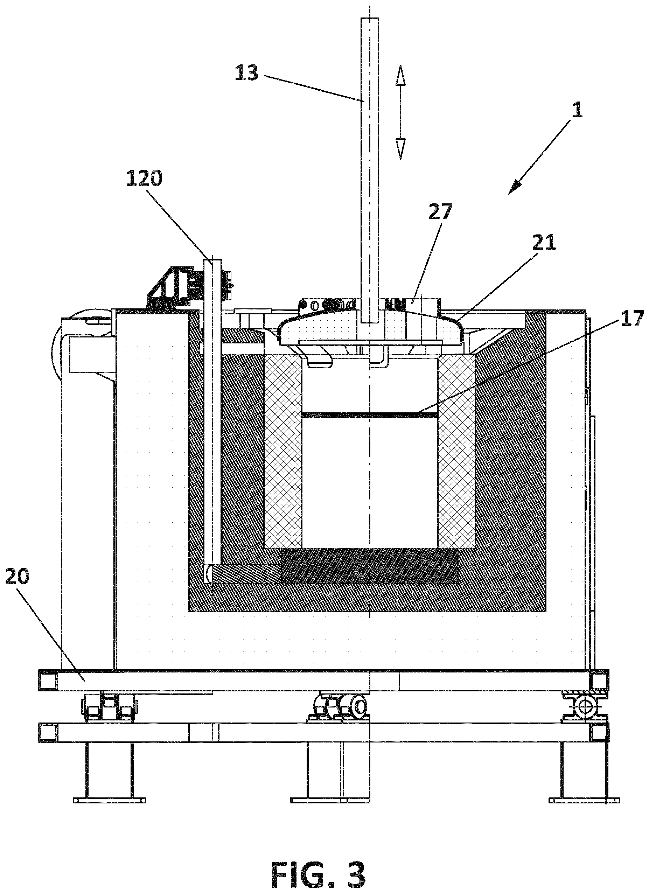

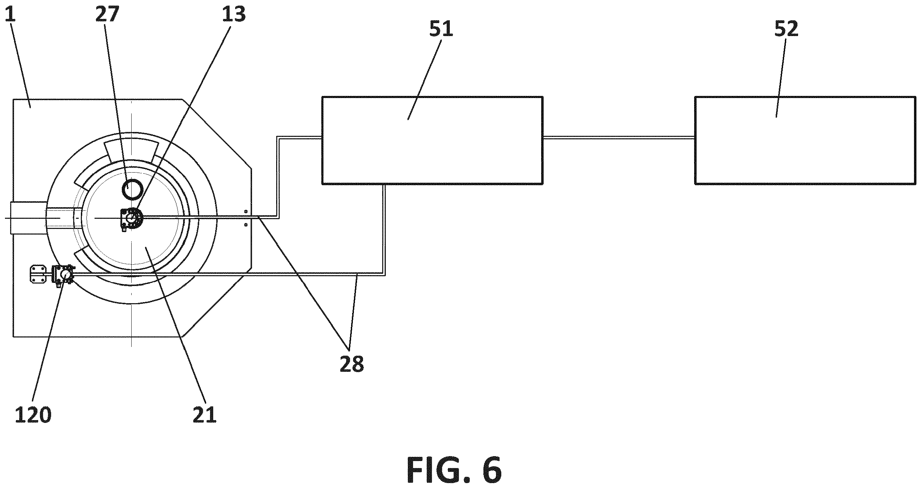

In operation, the furnace, in particular the crucible 12 and the material contained therein, is heated by a heating system comprising the two electrodes, cathode and anode, needed to allow current to flow from one electrode to the other one when a DC power supply with which the heating system is equipped, is switched on. Figure 6 illustrates a block diagram of the electrical circuit for powering the furnace 1. Cathode connection 13 is electrically connected to a corresponding connection in an electrical panel or board 51. Similarly, anode connection 120 is electrically connected to a corresponding connection in the electrical panel or board 51. Both connections are typically made with a conventional DC electrical cable 28. These cables 28 are preferably cooled by cooling means, such as water. The electrical panel or board 51 is in turn electrically connected to a rectifier 52. Cathode 13 and anode 120 connections are also shown in the cross-sectional view of Figure 3.

Cathode 13 is a movable electrode. In embodiments of the invention it is the movable part of a plasma torch. Due to its linear movement, it provides the furnace with the capability of power regulation according to the furnace operation conditions. The electrode acting as cathode 13 is inserted -thanks to its linear movement- through hole 26 into the tank 10, that is to say, into the volume 11 defined by the crucible 12. Thanks to the linear movement of the cathode plasma torch, the power at the input of the chamber can be adjusted, as the position of the movable electrode can be changed depending on the electric resistivity of the charge (melt, etc.). Through the hollow 26 made in the cover 21, electrode 13 projects in vertically displaceable manner into the volume defined by the crucible 12 and forms the cathode 13 for the DC arc. Cathode 13 therefore has linear movement capability.

Electrode 13 is held for example by a movable support arm 22 actioned with an electrically active connector 24, such as a clamp. Clamp has both mechanical and electrical functions (it holds the support arm 22 and makes the electrical wiring). Connectors 24 (such as clamps) also connect the electrodes -cathode 13 and anode (crucible) 12- with the required electric wiring 28. The electric wiring 28 is schematically represented in Figure 6. Clamp 24 is for example made of a copper alloy. In other words, it may be made of copper-based compounds, for example of compounds comprising at least 75% of copper and optionally at least one of Zn / Sn / Ni / Al / Fe. Clamps 24 are designed for easy electrode disassemble and change. Clamp 24 is cooled, for example by means of water. This assembly -movable support arm 22 and electrically active clamp 24- is made using a lining isolation part having high electric resistivity and thermic resistance, thus allowing working temperatures above 200°C. Isolation means and cooling means are out of the scope of the present invention.

In Figure 6, the main parts or elements of the electric circuit of the plasma torch are shown, including the electric wiring connecting to the plasma torch and the plasma torch system itself. An electric power cabinet 52, also referred to as rectifier, acts as direct current (DC) source. From the electric power cabinet 52, power is directed to an electric panel or board 51 for example using rigid cable or rigid wiring. Electric panel or board 51 is a connection exchanger that receives as input rigid cable or wiring and delivers at its output a refrigerated cable (refrigerated wiring) 28. In other words, power exchanger 51 enables to cool the electric connection towards the electrodes 13, 120, and therefore towards the plasma torch. Power exchanger 51 generates a voltage value difference between the electrodes 13, 120, which produces the ionization of a gas (air, nytrogen or argon) between electrodes and thus enables the pass of electric current from one electrode to the other one. The ionization process starts with the emission of electrons from cathode to anode, which is in fact the electric current. The parts of the furnace 1 being cooled (refrigerated) are preferably the DC electrical cables 28 and the assembly formed by the movable support arm 22 and the electrically active connector 24. Furnace body (crucible and surrounding walls) and auxiliary elements, except of wiring and clamp electrodes, are not water cooled.

Cathode 13 is made of an inorganic carbon-based material. Cathode 13 is preferably made of synthetic graphite having purity equal or above 98%. In other words, cathode 13 is preferably made of a material comprising at least 98% of synthetic graphite (percentage expressed by weight with respect to the total weight of the material) and an amount of ass content equal or less than 2% (percentage expressed by weight with respect to the total weight of the material). As a matter of example, the material of which the cathode is made may be produced using a raw material having at least 30% of needle coke.

As shown in Figure 2, the electrode acting as anode is the crucible 12. In other words, the crucible 12 (portion of the furnace defining the chamber or inner volume 11 defined by the tank 10) constitutes the anode. The anode (crucible 12) has therefore a double function: as crucible, it receives and holds the material to be treated (such as metal, waste or molten material); as anode, it provides electric conduction for the flow of current in the heating system. The heating system provides the chamber 11 defined by the crucible 12 with enough energy to melt and treat the materials with which the chamber 11 has been filled. The bottom and side walls defining the inner chamber 11 are therefore the anode 12 of the heating system, as shown in Figure 2. Cathode 13 is isolated, from the electric point of view, from the anode 12. In operation, the anode 12 is well protected by the melt filing the crucible, from impingement of the plasma arc. Layer 12 forming the crucible, and also the anode of the heating system, is made of an inorganic carbon-based material. Layer 12 is preferably made of synthetic graphite having purity equal or above 98%. In other words, it is preferably made of a material comprising at least 98% of synthetic graphite (percentage expressed by weight with respect to the total weight of the material) and an amount of ass content equal or less than 2% (percentage expressed by weight with respect to the total weight of the material). As a matter of example, the material of which the cathode is made may be produced using a raw material having at least 30% of needle coke. Compounds comprising at least 98% of carbon have high electric and thermal conductivity. Therefore, both the cathode and the crucible, that is to say, the anode, have high electric and thermal conductivity.

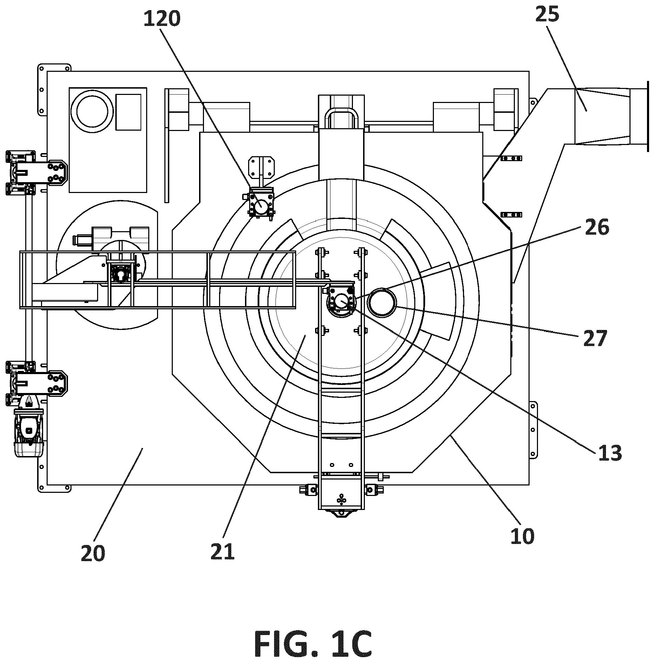

Figure 2 shows a possible implementation of the heating system, in particular plasma torch heating system. The anode system (crucible -anode system) is made of the crucible 12 itself and at least one part connecting the crucible 12 and the second electrode 120. For ease of construction and maintenance, the anode system (crucible - anode system) may be made of three parts: the crucible 12 itself (perimeter wall and bottom wall defining chamber 11); a first elongated portion 12' having a first end connected to the bottom wall of the crucible 12 and extending radially from the bottom wall of the crucible through a refractory wall (not yet disclosed in detail); and a second elongated portion 12" having a first end connected to the second end of the first elongated portion 12'. The second elongated portion 12" extends vertically through a refractory wall or between two refractory walls (not yet disclosed in detail) until it shows up at the upper end of the furnace 1, in the vicinity of cover 21. In Figure 2, the free end of the second elongated portion 12" is referred to as 120 (anode connection), in line with the corresponding element 120 in Figure 1. Preferably, all three parts 12, 12', 12" are made with substantially the same material. They are made of an inorganic carbon-based material. They are preferably made of synthetic graphite having purity equal or above 98%. In other words, they are preferably made of a material comprising at least 98% of synthetic graphite (percentage expressed by weight with respect to the total weight of the material) and an amount of ass content equal or less than 2% (percentage expressed by weight with respect to the total weight of the material). As a matter of example, the material of which they are made may be produced using a raw material having at least 30% of needle coke. The difference in conductivity in the three parts 12, 12', 12" is preferably less than 5%, or less than 4%, or less than 3%.

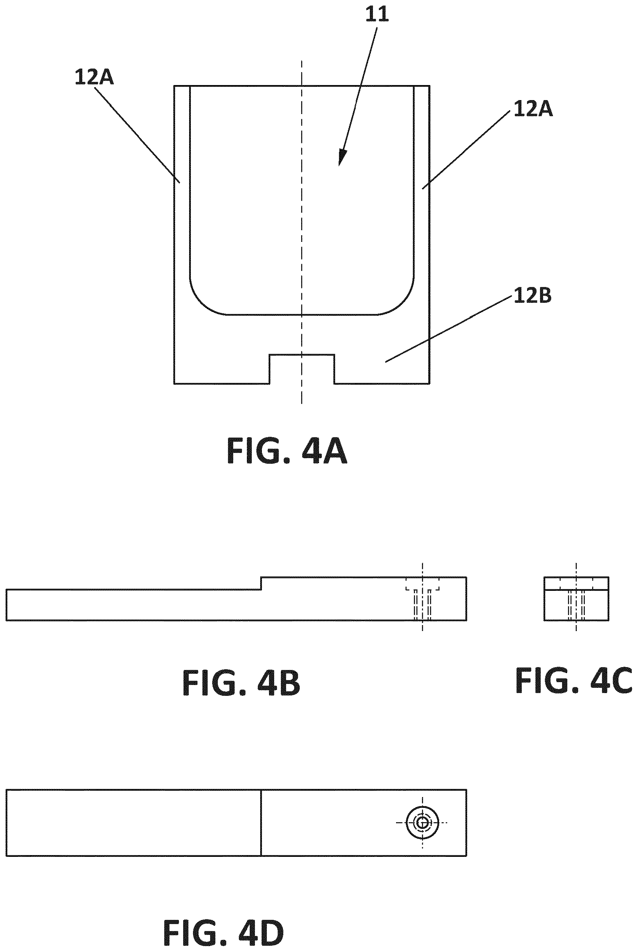

Inventors have observed that having an anode which corresponds to the crucible 12 provides the effect of having the same voltage potential difference all along the outer surface of the crucible. This makes the heating system more stable than conventional ones, in which the anode is implemented, for example, as a group of electric plates disposed in a certain portion of the crucible. As a consequence, the temperature of the material to be treated within the crucible is more stable. In other words, material (metal, waste, etc.) is treated in the anode itself. Figure 4A shows a view of the crucible 12 and the cavity 11 thereby defined, according to a possible implementation of the furnace. The shown geometry of the anode allows better control of the plasma jet due to the isopotential (iso-electric potential or iso-voltage potential) in all points in the walls (floor and side walls) of the crucible. In operation of the furnace 1, the material held in the crucible 12 at high temperature, such as to be melted, is between anode and cathode, and in direct contact with the anode, as a consequence of which it reaches the same voltage as the anode (crucible 12) and acts in fact as anode part in the plasma system. In other words, the larger the surface of the anode (crucible 12), the easier is for the electrons emitted by the cathode to reach the anode. This is especially important when the jet starts (at the beginning of the operation) or in the event of poor conductivity conditions for example due to the type of material being loaded into the furnace 1.

At the start of the furnace operation, that is to say, at ambient temperature, the material to be loaded is preferably metallic, or at least having a similar electric conductivity as metallic materials, since for the startup a minimum electric conductivity is required, until a certain temperature is reached (for example, about 800 °C). This way, the loaded material also acts as anode in the plasma torch system. For example, an amount of metallic material filling the crucible with a depth of about 10 mm is required. The material is then melted under the heating action of the energy radiated by the plasma column 19 and keeps in liquid state in the crucible 12. Once the starting conditions are fulfilled and a certain temperature has been reached, the furnace can be loaded with non-metallic material (in general, with material with poor conductivity) to be melted, since at operation temperature non-metallic materials are conductive enough to substantially reach the same voltage as the anode. Non-conductive materials are melted due the effect of the plasma jet through radiation and convection heat transfer (until they reach temperatures higher than 1.000°C for example). The electrons generated at the cathode 13 flow in the plasma column 19 and are collected at the surface of the molten bath 17 which acts as anode surface, thereby releasing their heat of recombination and heating the molten bath 17. The maximum level of molten metal is estimated to be, for example, about 2/3 of the chamber height (Figure 3).

In sum, the anode provides high conduction to current flow and stabilizes the plasma jet inside the cavity 11, because the crucible 12 provides a iso-electric potential surface. In this text, when it is said that the crucible is isopotential, an error or tolerance of about +/-1% is to be assumed. In particular, disturbances in the output voltage are lower than 5% of a setup objective. Setup objective is formed by selected voltage and intensity objectives in order to obtain desired power output. Voltage and intensity values are parameters of the heating process and relate to electrical conditions between anode and cathode.

When starting operation the charge (material) to be processed may be added in solid form (typically at ambient temperature) and then melted in the furnace. Alternatively, it may be directly transferred in liquid state from another furnace. Usually, the material to be treated is loaded in solid state, starting operation at ambient temperature and heating the furnace as explained, up to the adequate operation temperature, which depends of the process being carried out. The operation temperature is held for the time needed to process the material. The material -added for example in solid state-keeps in contact with the anode (because the whole crucible is anode, it is an iso-voltage area), as a consequence of which all material fed is substantially at the same voltage.

Charge (material being treated) is never solidified into the anode-crucible 12, as it has to be poured in liquid state out of the furnace. As already explained, liquid material is poured out of the furnace for example by tilting the furnace, or through manual extraction, or using pumping means, such as pneumatic pumping means, among others. For this reason (because the material to be treated must be extracted in liquid state, and therefore, the operation temperature must be kept high enough during the whole process), the crucible 12 and its surrounding layers (refractory layers and metallic frame) are not refrigerated, in order to prevent the material being treated from solidifying within the crucible 12. For this reason, optimized refractory layers need to be designed. Should the crucible be refrigerated, a much higher amount of energy would be required in order to keep the treated material in melted state until it is extracted from the furnace.

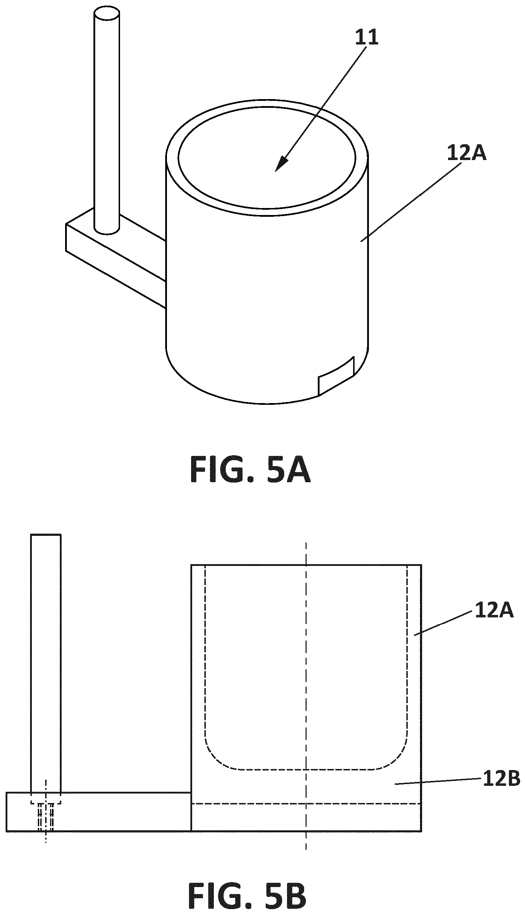

Turning back to the anode system, figures 4B-4D show different views of the first elongated portion 12'. The second elongated portion 12" is not shown. It can be implemented with a cylinder, either solid or hollow, having for example a thread at the end to be connected to the first elongated portion 12'. In other words, the two elongated parts 12' 12" connect the bottom part of the crucible 12 with the outer part of the tank 10, enabling the electrical connection between the crucible 12 acting as anode and the DC power supply. Parts 12', 12" are therefore part, together with the crucible 12, of the anode system. Figures 5A-5B show the three parts 12, 12', 12" forming the anode system, once assembled.

In the embodiment of Figures 4A-4D, the bottom portion 12B of the crucible 12 has a minimum thickness of 120 mm (millimeters, 10⁻³ meters) and a maximum thickness of 250 mm. The side wall 12A (perimeter wall) of the crucible 12 has a minimum thickness of 25 mm and a maximum thickness of 75 mm. As a matter of example, when a furnace having a crucible of 530 mm of internal diameter and the cathode is configured to provide a plasma jet of around 160 kW (kilowatt, 10³ Watt), the bottom portion 12B of the crucible 12 may be selected to be 160 mm and the side wall 12A (perimeter wall) of the crucible 12 may be selected to be 35 mm thickness.

The anode system 12, 12', 12" and the cathode 13 are easily replaceable. In particular, parts 12' 12" enable the easy replacement of the anode. Because anode system is made in this embodiment of three independent removable parts, and because the material around them (between anode graphite parts and refractory walls, such as concrete walls) is preferably self-sintering refractory, if needed, graphite parts can be disassembled and the self-sintered material is of easy removal. Thus, three main body of refractory concrete stays without damage and removed parts can be replaced easily.

As explained, the anode (crucible 12) is preferably made of a material comprising at least 98% of synthetic graphite (percentage expressed by weight with respect to the total weight of the material) and an amount of ass content equal or less than 2% (percentage expressed by weight with respect to the total weight of the material). In a particular example, the anode (crucible 12) is made of a material comprising at least 98% of synthetic graphite obtained from a material comprising more than 30% of needle coke and graphitized at a temperature of at least 2,800°C. The apparent density of the material is at least 1.6 g/cm3, preferably between 1.65 and 1.75 g/cm3. The selected synthetic graphite provides high conductivity properties both within the temperature melting range, typically of 600-1,600°C, and at room temperature, such as lower than 50°C. At both temperature ranges electrically short conditions (such as, for example, < 10 Volt between anode and cathode) have to be obtained to allow current pass through the electric circuit. Therefore, the maximum resistivity allowed is 5.8 Ω x µm measured in current pass longitudinal direction.

Thermal conductivity of the material of which the anode is made, is also a key property for easy homogenization of the thermal conditions inside de chamber 11 formed by the anode 12. The thermal conductivity of the material of which the anode is made must be larger than 125 W/Km, preferably larger than 200 W/km.

Because expansion and contraction process values of the different materials conforming the furnace are not the same, the anode 12 must be able to support expansion and contraction forces. Therefore, the material of which the anode is made must have bending strength of at least 9 MN/m2 and a Young's module of preferably between 8 and 10 MPa. Its linear strength must be at least of 4.5 MPa.

Figure 2 shows a possible implementation of the layers, walls or portions 14A, 14B, 14C, 14D, 14E of refractory materials disposed between the crucible 12 and the metallic frame 15 that constitutes the outer surface of the furnace 1. Refractory layers 14A-14E are aimed at avoiding leaks, such as metal leaks, and at providing high insulation. In other words, the main body of the tank 10 is made of at least one refractory material adapted to the characteristics of the material to be melted/treated.

Non-limiting examples of refractory materials which can be used are concrete or brick. In the implementation of Figure 2, different refractory materials having different properties and functions, are used.

Layer 14A, which vertically surrounds the perimeter wall of the crucible 12, may be made of alumina-based corundum. In a particular embodiment, layer 14A is made of self-sintering alumina-based corundum having an amount of alumina (Aluminium oxide, Al₂O₃) larger than >85%, an amount of magnesia (Magnesium oxide, MgO) between 10 and 15%, an amount of Iron(III) oxide (Fe₂O₃) smaller than 0.3% and an amount of silica (Silicon dioxide, SiO2) smaller than 0.2% (percentages expressed by weight with respect to the total weight of the compound or composition). Grain size (largest dimension) is smaller than 6mm and apparent density is between 2.6 and 2.9 gr/cm3. This material has a maximum working temperature of 1800°C. Layer 14A preferably extends downwards beyond the inner base of the crucible 12, but without extending beyond the whole thickness of the bottom portion of the crucible 12 (as average just as far as the middle thickness of the bottom part 12B of the crucible 12). Thickness of layer 14A may be between 5 to 30mm.

A second portion or layer 14B of refractory material is disposed vertically surrounding the first layer 14A. This layer 14B may be made of alumina-based concrete. In a particular embodiment, layer 14B is made of alumina-based conformed concrete having an amount of alumina larger than 90% (preferably 94-97%) with contents of SiO2 < 0,5% and Fe2O3 < 0,5% (percentages expressed by weight with respect to the total weight of the compound or composition). Thickness of layer 14B os between 25 - 100mm. Maximum working temperature of this material is above 1800°C, or above 1850°C.

A third portion or layer 14C of refractory material is disposed beneath the bottom portion of the crucible 12. It preferably extends radially, in such a way that it is also disposed beneath the first and second layers 14A 14B, as well as beneath the first elongated portion 12' of the anode system. This layer 14B comprises calcined bauxite. It is capable of supporting a maximum temperature of 1,700°C. In a particular embodiment, layer 14C is made of a mixture of calcined bauxite in an amount between 80-90% and alumina-based concrete in an amount between 10-20% (percentages expressed by weight with respect to the total weight of the compound or composition). The thickness of the layer 14C may be variable. For example, its thickness may be larger beneath first and second layers 14A 14B than beneath the bottom part of the crucible 12. Average thickness of layer 14C at the bottom of the crucible is between 50 - 100 mm. A small layer 14C' of the same material as layer 14C surrounds the upper end of part 12"

A fourth portion or layer 14D of refractory material is disposed vertically surrounding the second layer 14B. This layer 14D is the last refractory wall before the metallic frame 15. Layer 14D preferably extends downwards with respect to the third layer 14C, in such a way that is surrounds all previous refractory portions disposed around the crucible 12. This layer 14B also comprises calcined bauxite. It is capable of supporting a maximum temperature of 1,500°C. In a particular embodiment, layer 14D is made of a mixture of calcined bauxite in an amount between 77-85% and alumina-based concrete in an amount between 15-23% (percentages expressed by weight with respect to the total weight of the compound or composition). Average thickness of this layer is between 50 - 250mm.

Surrounding the second elongated portion 12" of the anode system which extends vertically from the first elongated portion 12' thereof, there is a layer or portion 14E of refractory material. It may be a silica-based self-sintering refractory. Because the maximum temperature at this portion 12' is lower than the temperature at refractory walls closer to the crucible, a material having lower sintering temperature may be used, such as a silica-based self-sintering refractory.

The space (if any) between the outer furnace frame and the detailed refractory layers may be filled with isolating fibre and low density isolating bauxite refractories. These materials may also be used for filling layer 14F at the bottom of the furnace. All these layers or portions 14A-14F provide high isolating capacity.

By controlling the furnace atmosphere, the content of free oxygen inside the chamber 11 is minimized, for example reduced to less than 1%. The furnace atmosphere is controlled (low oxygen content) using an inert gas purge inserted through the cathode and adding reducing material (carbon-base) with the material to be heated. In the chamber 11 of the furnace 1, reduction-oxidation process reactions can be controlled by applying accurate temperature control and guaranteeing inner atmosphere specific conditions. The furnace may be used in reduction of metal oxides contained in ores, by-products and industrial wastes.

Next, several experiments involving metallurgic reactions, carried out with a furnace implemented according to the shown figures, are disclosed.

In a first experiment, tin oxides from non-ferrous detinning processes are reduced in a furnace as shown in Figure 1. The diameter of the plasma torch electrode is 75mm (+/-3%). Electric maximum power of 160 kW and average power input of 100-110 kWh for 200 Kg/h material treatment is used. The average composition to be treated is: 70 - 85 % SnO / SnO2; 5 - 20 % Cu / CuO; Zn < 5%; Fe < 2%; Ag < 0,5%; Ni < 1%; others including for example SiOz or Al₂O₃ < 8%. It has been treated in the furnace at an average temperature between 1,050°C and 1,180°C, with a minimum process temperature of 950°C and a maximum process temperature of 1,250°C. Atmosphere is reduced to λ< 1 (where λ value is CO₂max / CO₂ = 1 + (O₂ / (21-O₂)). Slag-conditioning elements containing different amounts of SiO2, Al2O3, Na3(AIF6), MgO and Fe2O3 are added and mixed with the tin oxide raw material. The following reactions are carried out in the chamber 11 defined by the crucible 12:

xSnO + yC = xSn + CO₂

SnO + C = Sn + CO

CuO + C = Cu + CO

SnO₂ + 2CO = 2Sn + 2CO₂

Zn (s) (+ Q) = Zn (g)

While fume is being captured and delivered to extraction conduit 25, a reoxidation process takes place (from Zn to ZnO, in this example). Reoxidation occurs while material is being melted within the furnace. Fume is extracted from the furnace as already explained.

Zn (g) + O = ZnO (g)

As a result of the reducing or refining process, molten metal bath is obtained with the following compositions: Sn: 85-95 %; Cu: 5-15%; Fe: < 0,2%; Ni: < 0,2%; Zn < 0,5%. Additionally, slag and filter powder are obtained, such as by-products.

Slag average composition is CuO<5%, SnO 10-25%, Fe2O3 5-15%, AI2O3 5-25% MgO <5%, SiO2 5-20% CaO 3-8% and variable amounts of C (<5% and Na2O<25%.Rest of elements <3%.

Filter dust composition is SnO 50-75%, ZnO 10-25%, Na2O 5-20% and resto of residual elements <3%.

In the same furnace used in the first experiment, a second experiment is made. It is a reduction refining process for copper oxides coming from shorting and stripping of non-ferrous copper based scraps, with average composition of: Cu < 40%; CuO 60-90 %; Sn < 1%; Ni < 1%; Fe <2%; Zn < 5%; others (including for example SiO2, Al2O3, MgO,...) < 10%.It has been treated in the furnace at an average temperature between 1,150°C and 1,300°C, with a minimum process temperature of 1,050°C and a maximum process temperature of 1,350°C. Atmosphere is reduced as λ< 1 (where λ value is CO₂max / CO₂ = 1 + (O₂ / (21-O₂)). Slag-conditioning elements containing different amounts of SiO2, Al2O3, Na3(AIF6), MgO and Fe2O3 are added and mixed with the tin oxide raw material. The following reactions are carried out in the chamber 11 defined by the crucible 12:

CuO + C = Cu + CO

xSnO + yC = xSn + CO₂

SnO + C = Sn + CO

SnO₂ + 2CO = 2Sn + 2CO₂

Zn (s) (+ Q) = Zn (g)

And afterwards, in the fume capturing system:

Zn (g) + O = ZnO (g)

As a result of the reducing or refining process, a molten metal bath is obtained with the following compositions: Cu: > 98 %; Sn + Fe + Ni : < 2%; Zn < 0,5%.

In this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A direct current plasma arc furnace (1) for melting and/or treating a material by production of electric arcs and providing a molten product, the furnace (1) comprising:
a tank (10) comprising: a crucible (12) delimiting a chamber (11) configured to receive material to be melted and/or treated; a plurality of refractory walls surrounding the outer surface of the crucible (12); and a metallic frame (15) covering the refractory walls;
a heating system configured for heating the received material, the heating system comprising a first electrode acting as cathode (13) and a second electrode (120) acting as anode, wherein the first electrode acting as cathode (13) is a movable electrode configured to project vertically into the chamber (11) delimited by the crucible (12);
wherein the crucible (12) is made of a material comprising at least 98% in weight of synthetic graphite,
the furnace (1) being **characterized in that** the crucible (12) is part of an anode system, the anode system consisting of the crucible (12), said second electrode (120) and at least one part (12', 12") connecting the crucible (12) and the second electrode (120), said crucible (12) having a double function: receiving and holding material to be melted and/or treated and providing electric conduction for the flow of current to heat said material, in such a way that, in use of the furnace (1), the voltage potential difference between the cathode (13) and any point of the surface of the crucible (12) defined to be in contact with the material to be melted and/or treated is the same; and wherein said at least one part (12', 12") of the anode system comprises: a first elongated portion (12') having a first end connected to the bottom wall of the crucible (12) and extending radially therefrom; and a second elongated portion (12") having a first end connected to the second end of the first elongated portion (12'), the second elongated portion (12") extending vertically until its second end (120) shows up outside the furnace (1).

2. The furnace (1) of claim 1, wherein the heating system comprises a plasma torch.

3. The furnace (1) of any one of claims 1-2, wherein the cathode (13) is made of a material comprising at least 98% in weight of synthetic graphite.

4. The furnace (1) of any one of claims 1-3, wherein the plurality of refractory walls disposed between the outer surface of the crucible (12) and the metallic frame (15) comprises: a first layer (14A) of refractory material vertically surrounding the perimeter wall of the crucible (12); a second layer (14B) of refractory material vertically surrounding the first layer (14A); a third layer (14C) of refractory material disposed beneath the bottom portion of the crucible (12); and a fourth layer (14D) of refractory material vertically surrounding the second layer (14B) and in contact with the outer metallic frame (15).

5. The furnace (1) of claim 4, wherein the first layer (14A) comprises alumina-based corundum.

6. The furnace (1) of claim 5, wherein the first layer (14A) is made of self-sintering alumina-based corundum having an amount of alumina larger than 85% in weight.

7. The furnace (1) of any of claims 4-6, wherein the second layer (14B) comprises alumina-based concrete.

8. The furnace (1) of claim 7, wherein the second layer (14B) is made of alumina-based conformed concrete having an amount of alumina larger than 90% in weight.

9. The furnace (1) of any of claims 4-8, wherein the third layer (14C) and the fourth layer (14D) comprise calcined bauxite.

10. The furnace (1) of claim 9, wherein the third layer (14C) and the fourth layer (14D) also comprise alumina-based concrete.

11. The furnace (1) of any of claims 4-10, wherein the fourth layer (14D) extends downwards with respect to the third layer (14C), surrounding previous refractory portions disposed around the crucible (12).

12. The furnace (1) of any one of claims 4-11, further comprising a fifth layer (14E) of refractory material surrounding the second elongated portion (12") of the anode system, the fifth layer (14E) being a silica-based self-sintering refractory.

13. Use of the furnace (1) of any preceding claim for melting or treating metals and/or metallic wastes and/or by-products containing metals and other chemical compounds.

## Patentansprüche

1. Ein Gleichstrom-Plasmalichtbogenofen (1) zum Schmelzen und/oder Behandeln eines Materials durch Erzeugung elektrischer Lichtbögen und Bereitstellen eines geschmolzenen Produkts, wobei der Ofen (1) umfasst:
einen Tank (10) umfassend einen Tiegel (12), der eine Kammer (11) begrenzt, die so konfiguriert ist, dass sie zu schmelzendes und/oder zu behandelndes Material aufnimmt;
eine Vielzahl von feuerfesten Wänden, die die Außenfläche des Tiegels (12) umgeben; und
einen Metallrahmen (15), der die feuerfesten Wände abdeckt;
ein Heizsystem, das zum Erhitzen des aufgenommenen Materials konfiguriert ist, wobei das Heizsystem eine erste Elektrode, die als Kathode (13) wirkt, und eine zweite Elektrode (120), die als Anode wirkt, umfasst, wobei die erste Elektrode, die als Kathode (13) wirkt, eine bewegliche Elektrode ist, die so konfiguriert ist, dass sie vertikal in die Kammer (11) ragt, die durch den Tiegel (12) begrenzt ist;
wobei der Tiegel (12) aus einem Material hergestellt ist, das mindestens 98 Gew.-% synthetischen Graphit umfasst;
der Ofen (1) **dadurch gekennzeichnet ist, dass** der Tiegel (12) Teil eines Anodensystems ist, wobei das Anodensystem aus dem Tiegel (12), der zweiten Elektrode (120) und mindestens einem Teil (12', 12") besteht, das den Tiegel (12) und die zweite Elektrode (120) verbindet, wobei der Tiegel (12) eine Doppelfunktion hat: Aufnehmen und Halten des zu schmelzenden und/oder zu behandelnden Materials und Bereitstellen einer elektrischen Leitung für den Stromfluss zum Erhitzen des Materials, so dass im Betrieb des Ofens (1) die Spannungspotentialdifferenz zwischen der Kathode (13) und jedem Punkt der Oberfläche des Tiegels (12), der so definiert ist, dass er mit dem zu schmelzenden und/oder zu behandelnden Material in Kontakt ist, gleich ist; und wobei der mindestens eine Teil (12', 12") des Anodensystems umfasst: einen ersten länglichen Abschnitt (12') mit einem ersten Ende, das mit der Bodenwand des Tiegels (12) verbunden ist und sich radial davon erstreckt; und einen zweiten länglichen Abschnitt (12") mit einem ersten Ende, das mit der Bodenwand des Tiegels (12) verbunden ist und sich radial davon erstreckt; und einen zweiten länglichen Abschnitt (12") mit einem ersten Ende, das mit dem zweiten Ende des ersten länglichen Abschnitts (12') verbunden ist, wobei sich der zweite längliche Abschnitt (12") vertikal erstreckt, bis sein zweites Ende (120) aus dem Ofen (1) herauszeigt.

2. Der Ofen (1) gemäß Anspruch 1, wobei das Heizsystem einen Plasmabrenner umfasst.

3. Der Ofen (1) gemäß einem der Ansprüche 1 oder 2, wobei die Kathode (13) aus einem Material hergestellt ist, das zu mindestens 98 Gew.-% aus synthetischem Graphit besteht.

4. Der Ofen (1) gemäß einem der Ansprüche 1 bis 3, wobei die Vielzahl von feuerfesten Wänden, die zwischen der Außenfläche des Tiegels (12) und dem Metallrahmen (15) angeordnet sind, umfasst: eine erste Schicht (14A) aus feuerfestem Material, die die Umfangswand des Tiegels (12) vertikal umgibt; eine zweite Schicht (14B) auf feuerfestem Material, die erste Schicht (14A) vertikal umgibt; eine dritte Schicht (14C) aus feuerfestem Material, die unter dem Bodenabschnitt des Tiegels (12) angeordnet ist; und eine vierte Schicht (14D) aus feuerfestem Material, die die zweite Schicht (14B) vertikal umgibt und in Kontakt mit dem äußeren Metallrahmen (15) steht.

5. Der Ofen (1) gemäß Anspruch 4, wobei die erste Schicht (14A) Korund auf Aluminiumoxidbasis umfasst.

6. Der Ofen (1) gemäß Anspruch 5, wobei die erste Schicht (14A) aus selbstsinterndem Korund auf Aluminiumoxidbasis mit einem Aluminiumoxidanteil von mehr als 85 Gew.-% hergestellt ist.

7. Der Ofen (1) gemäß einem der Ansprüche 4 bis 6, wobei die zweite Schicht (14B) Beton auf Aluminiumoxidbasis umfasst.

8. Der Ofen (1) gemäß Anspruch 7, wobei die zweite Schicht (14B) aus Beton auf Aluminiumoxidbasis mit einem Aluminiumoxidanteil von mehr als 90 Gew.-% hergestellt ist.

9. Der Ofen (1) gemäß einem der Ansprüche 4 bis 8, wobei die dritte Schicht (14C) und die vierte Schicht (14D) aus kalziniertem Bauxit bestehen.

10. Der Ofen (1) gemäß Anspruch 9, wobei die dritte Schicht (14C) und die vierte Schicht (14D) ebenfalls aus Beton auf Aluminiumoxidbasis bestehen.

11. Der Ofen (1) gemäß einem der Ansprüche 4 bis 10, wobei sich die vierte Schicht (14D) in Bezug auf die dritte Schicht (14C) nach unten erstreckt und frühere feuerfeste Abschnitte, die um den Tiegel (12) herum angeordnet sind, umgibt.

12. Der Ofen (1) gemäß einem der Ansprüche 4 bis 11, der ferner eine fünfte Schicht (14E) aus feuerfestem Material umfasst, die den zweiten länglichen Abschnitt (12") des Anodensystems umgibt, wobei die fünfte Schicht (14E) ein selbstsinterndes feuerfestes Material auf Siliziumdioxidbasis ist.

13. Verwendung des Ofens (1) gemäß einem der vorhergehenden Ansprüche zum Schmelzen oder Behandeln von Metallen und/oder metallischen Abfällen und/oder Nebenprodukten, die Metalle und andere chemische Verbindungen enthalten.

## Revendications

1. Four à arc à plasma en courant continu (1) pour fondre et/ou traiter un matériau par production d'arcs électrique et donner un produit fondu, le four (1) comprenant :
une cuve (10) comprenant : un creuset (12) délimitant une chambre (11) configurée pour recevoir un matériau devant être fondu et/ou traité ; une pluralité de parois réfractaires entourant la surface extérieure du creuset (12) et un bâti métallique (15) couvrant les parois réfractaires ;
un système de chauffage configuré pour chauffer le matériau reçu, le système de chauffage comprenant une première électrode agissant comme une cathode (13) et une deuxième électrode (120) agissant comme une anode, dans lequel la première électrode agissant comme une cathode (13) est une électrode mobile configurée pour se projeter verticalement dans la chambre (11) délimitée par le creuset (12) ;
dans lequel le creuset (12) est fait d'un matériau comprenant au moins 98 % en poids de graphite synthétique,
le four (1) étant **caractérisé en ce que** le creuset (12) fait partie d'un système d'anode, le système d'anode consistant en le creuset (12), ladite deuxième électrode (120) et au moins une partie (12', 12") connectant le creuset (12) et la deuxième électrode (120), ledit creuset (12) ayant une double fonction : recevoir et maintenir le matériau devant être fondu et/ou traité et assurer une conduction électrique pour la circulation de courant pour chauffer ledit matériau, de telle sorte que, lors de l'utilisation du four (1), la différence de potentiel de tension entre la cathode (13) et un point quelconque de la surface du creuset (12) défini pour être en contact avec le matériau devant être fondu et/ou traité est identique ; et dans lequel ladite au moins une partie (12', 12") du système d'anode comprend : une première portion allongée (12') ayant une première extrémité connectée à la paroi inférieure du creuset (12) et s'étendant radialement à partir de celle-ci ; et une deuxième portion allongée (12") ayant une première extrémité connectée à la deuxième extrémité de la première portion allongée (12'), la deuxième portion allongée (12") s'étendant verticalement jusqu'à ce que sa deuxième extrémité (120) apparaisse à l'extérieur du four (1).

2. Four (1) selon la revendication 1, dans lequel le système de chauffage comprend une torche à plasma.

3. Four (1) selon l'une quelconque des revendications 1 et 2, dans lequel la cathode (13) est faite d'un matériau comprenant au moins 98 % en poids de graphite synthétique.

4. Four (1) selon l'une quelconque des revendications 1 à 3, dans lequel la pluralité de parois réfractaires disposées entre la surface extérieure du creuset (12) et le bâti métallique (15) comprend : une première couche (14A) de matériau réfractaire entourant verticalement la paroi périphérique du creuset (12) ; une deuxième couche (14B) de matériau réfractaire entourant verticalement la première couche (14A) ; une troisième couche (14C) de matériau réfractaire disposée sous la portion inférieure du creuset (12) ; et une quatrième couche (14D) de matériau réfractaire entourant verticalement la deuxième couche (14B) et en contact avec le bâti métallique extérieur (15).

5. Four (1) selon la revendication 4, dans lequel la première couche (14A) comprend un corindon à base d'alumine.

6. Four (1) selon la revendication 5, dans lequel la première couche (14A) est faite de corindon à base d'alumine auto-frittant ayant une quantité d'alumine supérieure à 85 % en poids.

7. Four (1) selon l'une quelconque des revendications 4 à 6, dans lequel la deuxième couche (14B) comprend un béton à base d'alumine.

8. Four (1) selon la revendication 7, dans lequel la deuxième couche (14B) est faite de béton conformé à base d'alumine ayant une quantité d'alumine supérieure à 90 % en poids.

9. Four (1) selon l'une quelconque des revendications 4 à 8, dans lequel la troisième couche (14C) et la quatrième couche (14D) comprennent de la bauxite calcinée.

10. Four (1) selon la revendication 9, dans lequel la troisième couche (14C) et la quatrième couche (14D) comprennent aussi un béton à base d'alumine.

11. Four (1) selon l'une quelconque des revendications 4 à 10, dans lequel la quatrième couche (14D) s'étend vers le bas par rapport à la troisième couche (14C), en entourant des portions réfractaires antérieures disposées autour du creuset (12).

12. Four (1) selon l'une quelconque des revendications 4 à 11, comprenant en outre une cinquième couche (14E) de matériau réfractaire entourant la deuxième portion allongée (12") du système d'anode, la cinquième couche (14E) étant un réfractaire auto-frittant à base de silice.

13. Utilisation du four (1) de l'une quelconque des revendications précédentes pour fondre ou traiter des métaux et/ou des déchets métalliques et/ou des sous-produits contenant des métaux et d'autres composés chimiques.
